Europäisches Patentamt

European Patent Office

Office européen des brevets

(11) Veröffentlichungsnummer: **0 242 414**
**B1**

(12) **EUROPÄISCHE PATENTSCHRIFT**

(45) Veröffentlichungstag der Patentschrift:
30.08.89

(21) Anmeldenummer: 86105501.0

(22) Anmeldetag: 21.04.86

(51) Int. Cl.⁴: **A01B 1/06, A01B 33/06**

(54) Vorrichtung zur Auflockerung des Bodens.

(43) Veröffentlichungstag der Anmeldung:
**28.10.87 Patentblatt 87/44**

(45) Bekanntmachung des Hinweises auf die Patenterteilung:
**30.08.89 Patentblatt 89/35**

(84) Benannte Vertragsstaaten:
**AT BE CH DE FR GB IT LI LU NL SE**

(56) Entgegenhaltungen:
**FR-A- 2 240 676**
**GB-A- 2 161 354**

(73) Patentinhaber: **Steiner, Walter, Säntisstrasse 52,**
**CH-8311 Brütten(CH)**

(72) Erfinder: **Steiner, Walter, Säntisstrasse 52,**
**CH-8311 Brütten(CH)**

(74) Vertreter: **Rottmann, Maximilian R., c/o Rottmann +**
**Quehl AG Glattalstrasse 37, CH-8052 Zürich(CH)**

**Beschreibung**

Die vorliegende Erfindung bezieht sich auf eine Vorrichtung zur Auflockerung des Bodens, insbesondere dessen oberflächennahen Schichten, nach dem Oberbegriff des Patentanspruches 1 bzw. des Patentanspruches 2.

Speziell soll mit der Erfindung ein Gerät geschaffen werden, welches für den Freizeit-Gärtner, aber auch für gewerbliche Verwendung geeignet ist und erlaubt, auf einfache, mühelose Weise ein Auflockern der Oberfläche der Erde in Blumen- und Gemüsebeeten und dgl. zwecks besserer Durchatmung des Bodens und zu dessen Pflege zu erreichen.

Selbst ein mit der Gartenbaukunde nur mässig vertrauter Laie weiss, dass die Erde von Blumenbeeten, Gemüsebeeten und dgl. von Zeit zu Zeit aufgelockert werden muss. Diese Arbeit ist von Hand, z.B. mit einer Harke, recht mühsam zu bewältigen und erfordert neben beträchtlichem Kraftaufwand auch verhältnissmässig viel Zeit. Zwar sind motorisch angetriebene Harken mit umlaufenden, schaufelartigen Harkelementen bekannt, mit denen diese Arbeit ziemlich mühelos erledigt werden kann. Diese bekannten Motorharken sind jedoch im allgemeinen gross, schwer und teuer und eignen sich in erster Linie für grössere, zusammenhängende Flächen, die in der geschilderten Weise bearbeitet werden müssen. Eine Verwendung solcher Geräte bei Blumen- oder Gemüsebeeten schliesst sich nicht nur wegen deren Grösse und Gewicht aus, sondern auch, weil der Auflockerungseffekt wegen der umlaufenden Harkorgane für die meisten Anwendungsfälle viel zu stark und nahezu nicht dosierbar ist.

Um diese Nachteile zu vermeiden, wurde in der FR-A 2 240 676 ein vereinfachtes Bodenlockerungsgerät der gattungsgemässen Art vorgeschlagen, welches ein Paar von zu einer gegensinnigen Bewegung antreibbaren Doppelzinken aufweist, die den Boden, insbesondere dessen oberflächennahe Schichten, aufzulockern bestimmt sind. Der Antrieb der Wellenzapfen dieser Doppelzinken erfolgt dabei, ausgehend von einem an der Antriebswelle des Motors befestigten Zahnrad, auf weitere Zahnräder, die über ein Kurbelgetriebe mit auf den Wellenzapfen der Doppelzinken befestigten Antriebsscheiben verbunden sind, und zwar über Kurbelstangen, die diese weiteren Zahnräder mit den genannten Antriebsscheiben verbinden. Das Getriebe besteht dementsprechend aus einer Vielzahl von präzise herzustellenden Einzelteilen, ist daher aufwendig in der Herstellung sowie einem schnellen Verschleiss ausgesetzt, da doch recht hohe Kräfte wirken.

Ein weiterer Nachteil des bekannten Gerätes ist darin zu sehen, dass eine Erweiterung des Bodenlockerungsgerätes im Sinne einer flächigeren oder wahlweise intensiveren Bearbeitung des Bodens ohne grundlegende Umkonstruktion kaum oder nur schwerlich möglich ist. Unter Umständen kann es nämlich wünschenswert sein, vier Doppelzinken nebeneinander zu verwenden, um in einem Durchgang einen breiteren Streifen zu bearbeiten, insbesondere bei an sich eher schon lockerem Boden. Eine Weiterbildung des aus der genannten FR-A bekannten Gerätes zu diesem Zweck dürfte sich in einem nochmals erhöhten, konstruktiven Aufwand niederschlagen.

Der Erfindung liegt die Aufgabe zugrunde, ein Bodenlockerungsgerät der gattungsgemässen Art zu schaffen, das durch einfachen Aufbau seiner Mechanik mit verringertem Aufwand herstellbar ist, das eine verbesserte Verschleissfestigkeit aufweist und das ohne grundlegende, konstruktive Änderungen der Antriebsmechanik als Gerät mit einem oder zwei Bodenlockerungswerkzeugen bzw. als Gerät mit vier oder mehr Bodenlockerungswerkzeugen ausbildbar ist.

Die Lösung dieser Aufgabe erfolgt erfindungsgemäss dadurch, dass die Mechanik für die Umwandlung der Drehbewegung in eine oszillierende Winkelbewegung einen im Tragkörper verschiebbar geführten Zahnstangenkörper aufweist, der durch den Eingriff eines mit der Antriebswelle verbundenen Kurbelzapfens in einen Schlitzraum des Zahnstangenkörpers hin- und herbewegbar ist, wobei ein am angetriebenen Wellenzapfen befestigtes Zahnrad bzw. an den in einander entgegengesetzten Richtungen angetriebenen Wellenzapfen befestigte Zahnräder jeweils mit einer Zähnegruppe des Zahnstangenkörpers in Eingriff steht bzw. stehen, und wobei im Falle mehrerer Wellenzapfen deren Zähne entgegengesetzt gerichtet sind zu denjenigen, die mit dem am anderen dieser Wellenzapfen befestigten Zahnrad in Eingriff stehen.

Aufgrund einer solchen erfindungsgemässen Ausführung lässt sich nicht nur ein sehr einfacher, daher preisgünstig herstellbarer sowie robuster und demnach verschleissfester Aufbau erzielen; ausserdem ist es möglich, auf einfache Weise, ohne Änderung der Grundkonstruktion, vier oder noch mehr Wellenzapfen, ausgehend von einer einzigen Antriebswelle, anzutreiben. Im Tragkörper ist dabei lediglich eine entsprechende Anzahl von Wellenzapfen zu lagern und am Zahnstangenkörper ist eine entsprechende Anzahl von Zähnegruppen vorzusehen, die mit dem jeweiligen Zahnrad des zugeordneten Wellenzapfens in Eingriff stehen.

Der motorische Antrieb ist vorzugsweise lösbar mit dem Tragkörper verbunden und lässt sich mit der an ihm befestigten Handhabe in zwei verschiedenen Winkelpositionen, insbesondere längs oder quer zu der Reihe der Wellenzapfen und den durch sie getragenen Bodenauflockerungswerkzeugen anordnen. Dadurch ist erreicht, dass beim Ziehen oder Schieben des Gerätes über den aufzulockernden Boden verschieden intensive Bodenbearbeitungen möglich sind, je nachdem, ob das Gerät quer zur Reihe der Auflockerungswerkzeuge bewegt wird, was eine relativ schwache, dafür breitflächige Bearbeitung ergibt, oder ob das Gerät in Richtung der Reihe der Auflockerungswerkzeuge bewegt wird, was eine schmale, aber intensive Bearbeitung des Bodens ermöglicht.

Zudem erlaubt die lösbare Verbindung des Antriebsmotors am Tragkörper die Kombination des motorischen Antriebs auch mit anderen Arbeitsgeräten.

Weitere Merkmale und vorteilhafte Weiterbildungen des erfindungsgemässen Bodenlockerungsgerätes gehen aus den abhängigen Ansprüchen hervor.

Im folgenden wird die Erfindung anhand von in den beiliegenden Zeichnungen dargestellten Ausführungsbeispielen näher erläutert. Dabei zeigt:

Fig. 1 eine Seitenansicht des Bodenlockerungsgerätes mit teilweiser Darstellung seines motorischen Antriebs;

Fig. 2 eine Ansicht des Tragkörpers mit den zugeordneten Bodenlockerungswerkzeugen von unten;

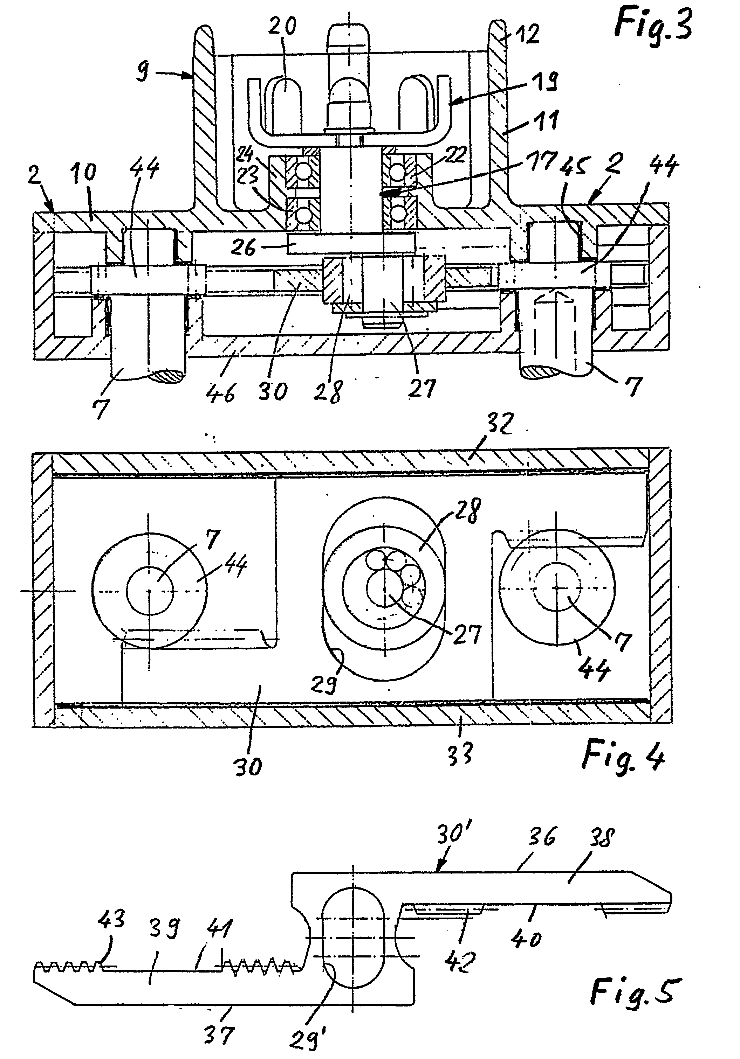

Fig. 3 einen Querschnitt durch ein Bodenlockerungsgerät ohne seinen motorischen Antrieb und mit nur zwei Zapfwellen;

Fig. 4 einen Querschnitt durch den Tragkörper, parallel zur Ebene des Zahnstangenkörpers, entsprechend dem Ausführungsbeispiel gemäss Fig. 3;

Fig. 5 eine Aufsicht auf den Zahnstangenkörper des Bodenlockerungsgerätes gemäss Fig. 1 und 2 in anderem Maßstab;

Fig. 6 eine Ansicht der Unterseite der oberen Gehäuseplatte des Tragkörpers des Bodenlockerungsgerätes nach den Fig. 1 und 2;

Fig. 7 eine Ansicht der Oberseite der unteren Gehäuseplatte des Tragkörpers des Bodenlockerungsgerätes nach den Fig. 1 und 2;

Fig. 8 einen Längsschnitt durch die Gehäuseplatte nach Fig. 6;

Fig. 9 einen Längsschnitt durch die Gehäuseplatte nach Fig. 7;

Fig. 10 einen Querschnitt durch die Gehäuseplatte nach Fig. 6;

Fig. 11 einen Querschnitt durch das mit der oberen Gehäuseplatte verbundene Kupplungsgehäuse in anderem Maßstab als nach Fig. 6 bis 10; und

Fig. 12 eine Aufsicht auf das Kupplungsgehäuse nach Fig. 11.

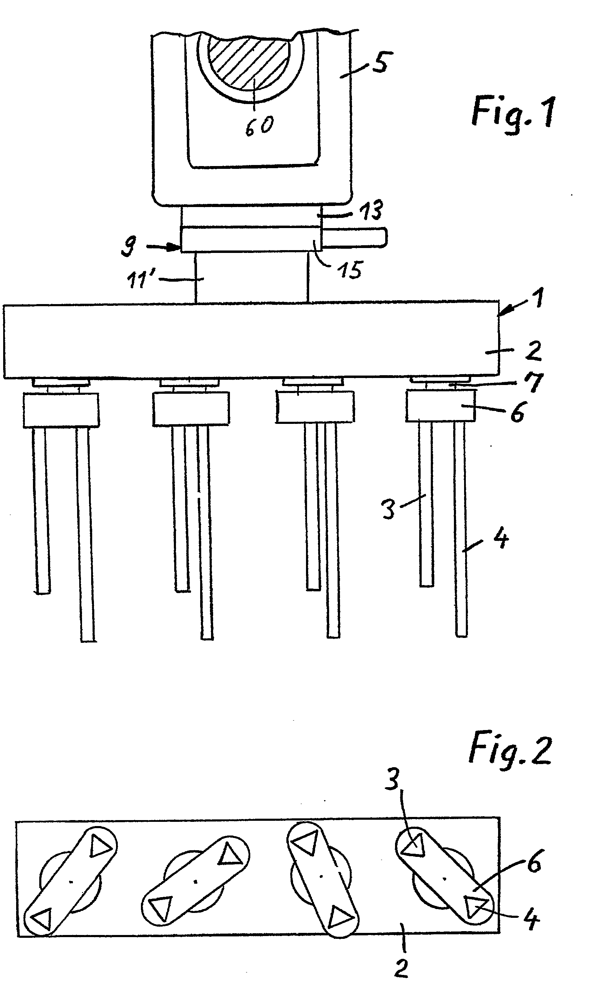

Wie der Darstellung aus Fig. 1 zu entnehmen ist, hat das Bodenlockerungsgerät 1 einen Tragkörper 2, der auf der einen Seite eine Anzahl von nach unten abstehenden, zinkenartigen Bodenlockerungswerkzeugen 3 und 4 und auf der anderen Seite einen motorischen Antrieb 5, z.B. einen Elektromotor, trägt.

Jeweils zwei der zinkenartigen Bodenlockerungswerkzeuge 3 und 4 sind an einem gemeinsamen Werkzeughalter 6 angebracht, der seinerseits lösbar an einem im Tragkörper 2 gelagerten Wellenzapfen 7 befestigt ist. Als Befestigungsmittel für die Verbindung zwischen dem Werkzeughalter 6 und dem Wellenzapfen 7 können (nicht dargestellte) Befestigungsschrauben dienen, die quer zur Achse des Werkzeuges bzw. des Wellenzapfens auf diese drücken oder in diese eingreifen. Die Bodenlockerungswerkzeuge 3 und 4, die im Beispielsfall ungleich lang ausgebildet sind, können fest oder auch lösbar, z.B. mittels (nicht dargestellter) Klemmschrauben, am Werkzeughalter 6 befestigt sein. Damit ergibt sich die Möglichkeit, unterschiedliche Bodenlockerungswerkzeuge am Gerät anzubringen, um unterschiedlicher Bodenbeschaffenheit gerecht werden zu können, sei es, durch Auswechslung eines Zinkenpaares mitsamt dem Werkzeugträger 6, sei es, durch Austausch einzelner der Werkzeuge 3 bzw. 4.

Der motorische Antrieb 5 ist über eine Kupplung 9 lösbar am Tragkörper 2 befestigt. Hierfür besitzt ein mit der oberen Gehäuseplatte 10 bzw. 10' fest verbundenes Kupplungsgehäuse 11 bzw. 11' an seinem Öffnungsrand vier parallel zur Achse der Antriebswelle nach aussen abstehende Verriegelungsfortsätze 12 bzw. 12', die in entsprechend angeordnete, nicht dargestellte Vertiefungen des am motorischen Antrieb 5 vorgesehenen Kupplungsgegengehäuses 13 eingreifen, so dass eine verdrehfeste Verbindung zwischen dem Kupplungsgehäuse 11 bzw. 11' und dem Kupplungsgegengehäuse 13 gegeben ist. Für die Verbindung in axialer Richtung stehen vom Kupplungsgehäuse 11' vier radiale Randstücke 14 nach aussen ab, die von entsprechenden, radial nach innen von einem Verriegelungsring 15 abstehenden Randstücken entsprechend einem Bajonettverschluss unterfasst werden. Ein seitlich vom Verriegelungsring 15 abstehender Griff 16 ermöglicht die Verdrehung des Verriegelungsringes 15 auf einer Bundführung relativ zum motorischen Antrieb 5 und dem Kupplungsgehäuse 11' zur Verriegelung oder Freigabe der Kupplung.

Die Antriebsverbindung zwischen der (nicht dargestellten) Antriebswelle des Antriebs 5 und einer Kurbelwelle 17 der im Gehäuse des Tragkörpers 2 eingeschlossenen Getriebemechanik erfolgt durch eine Klauenkupplung, deren an der Kurbelwelle 17 befestigter Eingriffsteil 19 mehrere, beispielsweise acht, auf einem Kreis angeordnete, achsparallel gerichtete Kupplungsklauen 20 aufweist. Bei der Herstellung der Kupplungsverbindung durch Zusammenschieben der Kupplungsgehäuse 11 bzw. 11' und 13 gelangen diese Kupplungsklauen 20 in Eingriff mit in entsprechender Anordnung vorgesehenen Öffnungen in einem (nicht dargestellten) Gegeneingriffsteil der Kupplung, der an der Antriebswelle des Antriebs 5 befestigt ist.

Die Kurbelwelle ist durch zwei Kugellager 22 und 23 in einer an der oberen Gehäuseplatte 10 oder dem Kupplungsgehäuse 11' vorgesehenen Nabe 24 bzw. 25 gelagert. Ihr achsversetzt an der Kurbelscheibe 26 vorgesehener Kurbelzapfen 27 ragt in das Tragkörpergehäuse hinein und steht dort über ein ihn umschliessendes Kugellager 28 in Eingriff mit einem Schlitzraum 29 eines Zahnstangenkörpers 30 bzw. 30'. Dieser Schlitzraum 29 erstreckt sich quer zur Längsausdehnung des Zahnstangenkörpers 30 bzw. 30', so dass die kreisende Kurbelbewegung des Kurbelzapfens 27 den Zahnstangenkörper 30 bzw. 30' innerhalb des Gehäuses des Tragkörpers 2 hin- und herbewegt.

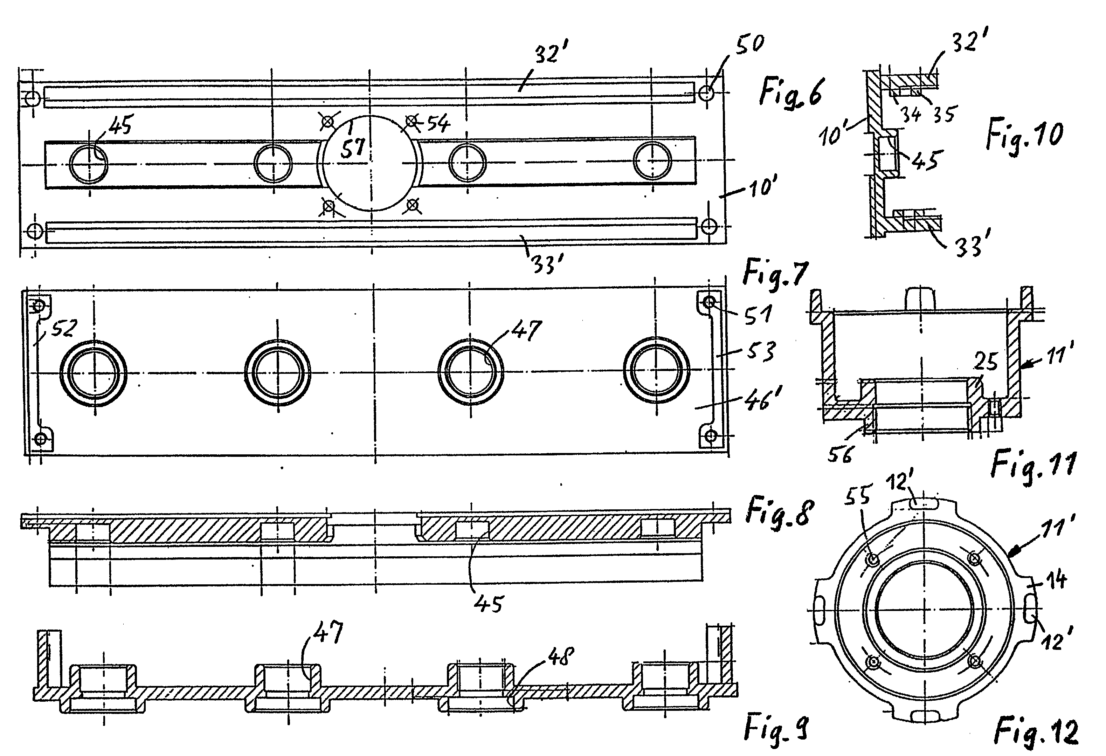

Eine Linearführung für den Zahnstangenkörper 30 bzw. 30' ist an den längsgerichteten Gehäuseseitenwänden 32 und 33 bzw. 32' und 33' vorgesehen. Beim Ausführungsbeispiel nach den Fig. 5 bis 10 sind in diesen längsgerichteten Gehäuseseitenwänden 32' und 33' Führungsrippen 34 und 35 vorgesehen, zwischen welche die längsgerichteten Aussenkanten 36 und 37 des Zahnstangenkörpers 30' eingreifen, so dass dieser beidseitig sicher geführt ist.

Der Zahnstangenkörper 30 bzw. 30' besitzt zwei entgegengesetzt gerichtete, gegeneinander versetzt angeordnete Antreibsschenkel 38 und 39. An der Innenkante 40 bzw. 41 dieser Antriebsschenkel 38 bzw. 39 sind Gruppen 42 von zahnstangenförmig angeordneten Getriebezähnen 43 angeformt, die jeweils in Eingriff mit einem am zugeordneten Wellenzapfen 7 befestigten Zahnrad 44 stehen.

Die Lagerung der Wellenzapfen 7 erfolgt in der oberen Gehäuseplatte 10 bzw. 10' in Gleitlagern 45 und in der unteren Gehäuseplatte 46 bzw. 46' in Gleitlagern 47, wobei sich die oberen Gleitlager 45 in einer geschlossenen Sackbohrung befinden. Die untere, durchgehende Lagerbohrung hingegen hat nach aussen bzw. unten hin eine Erweiterung 48 für die Aufnahme eines den Wellenzapfen 7 dicht umschliessenden Dichtungsringes.

Die Montage des Bodenlockerungsgerätes lässt sich schnell und einfach durchführen. Dabei wird der Zahnstangenkörper 30 bzw. 30' vom einen Ende der oberen Gehäuseplatte 10 bzw. 10' aus zwischen die fest angeformten Führungsrippen 34 und 35 der längsgerichteten Seitenwände 32 und 33 bzw. 32' und 33' eingeschoben und anschliessend werden die Wellenzapfen 7 einschliesslich ihrer Zahnräder 44 in ihr oberes oder unteres Gleitlager 45 bzw. 47 eingesetzt. Danach ist lediglich das Gehäuse durch deckelartiges Aneinanderfügen der oberen Gehäuseplatte 10 bzw. 10' an die untere Gehäuseplatte 46 bzw. 46' zu schliessen, wobei die Zahnräder 44 mit dem Zahnstangenkörper 30 bzw. 30' in Eingriff gelangen.

Verschlußschrauben werden durch Löcher 50 an den Ecken der oberen Gehäuseplatte 10 bzw. 10' in Gewindebohrungen 51 eingeschraubt, die sich an den schmalseitigen und an der unteren Gehäuseplatte 46 bzw. 46' angeformten Gehäuseseitenwänden 52 und 53 befinden. Die Befestigung des Kupplungsgehäuses 11' an der Oberseite der oberen Gehäuseplatte 10' erfolgt mittels Befestigungsschrauben, die durch Löcher 54 in der oberen Gehäuseplatte 10' geführt und in Gewindelöcher 55 im Boden des Kupplungsgehäuses 11' eingeschraubt sind. Ein kurzer Anschlußstutzen 56 am Kupplungsgehäuse 11' fasst ausserdem formschlüssig in die zentrale Bohrung 57 der oberen Gehäuseplatte ein.

Bei der Anwendung des erfindungsgemässen Bodenlockerungsgerätes werden die paarweise unterschiedlich langen Bodenlockerungswerkzeuge 3 und 4 in den Boden gedrückt oder sie wühlen sich, unter Einfluss des Gewichtes der Antriebseinheit 5 und des Tragkörpers 2, durch ihre kreisbogenförmige Schwenkbewegung um die geometrische Achse der Wellenzapfen 7 von selbst in den Boden. Anschliessend wird der Tragkörper 2 durch Ziehen oder Scheiben von Hand an der nach oben führenden, stangenförmigen Handhabe 60 über den Boden bewegt. Je nach Einsetzposition des Kupplungsgehäuses 13 und damit des Antriebs 5 relativ zum Tragkörper 2 bewegen sich dann die reihenförmig angeordneten Wellenzapfen mit den gabelförmigen, an ihnen befestigten Bodenlockerungswerkzeugen 3 und 4 entweder in Richtung dieser Reihenanordnung für eine intensive Bearbeitung des Bodens in einem schmalen Bereich oder aber quer dazu für eine weniger intensive Bearbeitung des Bodens in einem breiten Bereich.

Die z.B. um einen Winkel von 45° bis zu 90° erfolgende Schwenkbewegung der Bodenlockerungswerkzeuge 3 und 4 gewährleistet eine weitgehend gleichmässige Lockerung des Bodens. Die kürzeren Bodenlockerungswerkzeuge 3 bewirken dabei zunächst eine Vorauf lockerung des Bodens, welche durch die längeren Werkzeuge 4 vertieft wird. Diese Aufteilung führt zu einem geringeren Antriebsaufwand bei vorteilhaft tiefer und verteilter Auflockerung des Bodens, abhängig auch von der erwähnten Wahl zwischen den Bewegungsrichtungen des Gerätes über dem Boden.

Für die Führung des Tragkörpers 2 über die Oberfläche des Bodens bzw. zur Einstellung der Eingriffstiefe der Werkzeuge 3 und 4 können am Tragkörper vorzugsweise höhenverstellbare Kufen oder Räder angebracht sein.

Aus der vorangehenden Beschreibung und den zeichnerischen Darstellungen wird verständlich, dass ein erfindungsgemässes Bodenlockerungsgerät durch Verwendung weniger, bewegter Teile eine der Bodenbearbeitung angemessene Einfachheit und Widerstandsfähigkeit seiner Mechanik bei kostengünstiger Herstellung aufweist.

**Patentansprüche**

1. Bodenlockerungsgerät mit einem Tragkörper (2) für mindestens ein nach unten abstehendes, zinkenartiges Bodenlockerungswerkzeug (3, 4) und für einen motorischen Antrieb (5), der über ein im Tragkörper (2) aufgenommenes Getriebe in Antriebsverbindung mit dem Bodenlockerungswerkzeug (3, 4) steht, und mit einer Handhabe (60) für die Bewegung des Gerätes über die Oberfläche des aufzulockernden Bodens, wobei das Getriebe eine Mechanik (17, 30, 44) für die Umwandlung der kontinuierlichen Drehbewegung des Antriebs (5) in eine oszillierende Winkelbewegung von das Bodenlockerungswerkzeug (3, 4) in gabelartiger Anordnung tragenden Wellenzapfen (7) aufweist, dadurch gekennzeichnet, dass die Mechanik für die Umwandlung der Drehbewegung in eine oszillierende Winkelbewegung einen im Tragkörper (2) verschiebbar geführten Zahnstangenkörper (30, 30') aufweist, der durch den Eingriff eines mit der Antriebswelle des Antriebs (5) verbundenen Kurbelzapfens (27) in einen Schlitzraum (29) des Zahnstangenkörpers (30, 30') hin- und herbewegbar ist, wobei ein am angetriebenen Wellenzapfen (7) befestigtes Zahnrad (44) mit einer Zähnegruppe (42) einer Zahnstange (38, 39) des Zahnstangenkörpers (30, 30') in Eingriff steht.

2. Bodenlockerungsgerät mit einem Tragkörper (2) für mehrere nach unten abstehende, zinkenartige Bodenlockerungswerkzeuge (3, 4) und für einen motorischen Antrieb (5), der über ein im Tragkörper (2) aufgenommenes Getriebe in Antriebsverbindung mit den Bodenlockerungswerkzeugen (3, 4) steht, und mit einer Handhabe (60) für die Bewegung des Gerätes über die Oberfläche des aufzulockernden Bodens, wobei das Getriebe eine Mechanik (17, 30, 44) für die Umwandlung der kontinuierlichen Drehbewegung des Antriebs (5) in eine oszillierende Winkelbewegung von die Bodenlockerungswerkzeuge (3, 4) in gabelartiger Anordnung tragenden Wellenzapfen (7) aufweist, von denen mindestens zwei in einander entgegengesetzter Richtung angetrieben sind, dadurch gekennzeichnet, dass die Mechanik für die Umwandlung der Drehbewegung in eine oszillierende Winkelbewegung einen im Tragkörper (2) verschiebbar geführten Zahnstangenkörper (30, 30') aufweist, der durch den Eingriff eines mit der Antriebswelle des Antriebs (5) verbundenen Kurbelzapfens (27) in einen Schlitzraum (29) des Zahnstangenkörpers (30, 30') hin- und herbewegbar ist, wobei an den in einander entgegengesetzten Richtungen angetriebenen Wellenzapfen (7) befestigte Zahnräder (44) jeweils mit einer Zähnegruppe (42) einer Zahnstange (38, 39) des Zahnstangenkörpers (30, 30') in Eingriff stehen, deren Zähne (43) entgegengesetzt gerichtet sind zu denjenigen, die mit dem am anderen dieser Wellenzapfen (7) befestigten Zahnrad (44) in Eingriff stehen.

3. Bodenlockerungsgerät nach Anspruch 2, dadurch gekennzeichnet, dass der Zahnstangenkörper (30, 30') zwei entgegengesetzt zueinander gerichtete und gegeneinander versetzte Antriebsschenkel (38, 39) als Zahnstangen aufweist, wobei die Zähne gruppen (42) an der Innenkante (40, 41) dieser Antriebsschenkel (38, 39) angeordnet sind.

4. Bodenlockerungsgerät nach einem der Ansprüche 1 bis 3, dadurch gekennzeichnet, dass an den längsgerichteten Seitenwänden (32, 33; 32', 33') des Gehäuses des Tragkörpers (2) Führungen (34, 35) für den Zahnstangenkörper (30, 30') vorgesehen sind.

5. Bodenlockerungsgerät nach einem der Ansprüche 2 bis 4, dadurch gekennzeichnet, dass vier in einer Reihe angeordnete Wellenzapfen (7) vorgesehen sind, die paarweise zu einer entgegengesetzten, oszillierenden Bewegung angetrieben sind.

6. Bodenlockerungsgerät nach einem der Ansprüche 1 bis 5, dadurch gekennzeichnet, dass die an einem Wellenzapfen (7) befestigten Werkzeuge unterschiedlich lang sind.

7. Bodenlockerungsgerät nach einem der Ansprüche 1 bis 6, dadurch gekennzeichnet, dass der motorische Antrieb (5) mit einer an ihm befestigten Handhabe (60) in mindestens zwei verschiedenen Winkelpositionen durch eine Kupplung (9) lösbar mit dem Tragkörper (2) verbindbar ist.

**Claims**

1. Soil loosening device having a support (2) for at least one downwardly projecting, tine-like soil loosening tool (3, 4) and for a motorised drive (5) which is in a driving relationship with the soil loosening tool (3, 4) via a gearing arrangement accommodated in the support (2), and having a handle (60) for moving the device over the surface of the ground that is to be loosened, the gearing arrangement incorporating a mechanism (17, 30, 44) for converting the continuous rotation of the drive (5) into in oscillating angular motion of shaft journals (7) which carry the soil loosening tool (3, 4) in a fork-like arrangement, characterised in that the mechanism for converting the rotation into an oscillating angular motion incorporates a rack body (30, 30') which is displaceably located in the support (2) and which can be moved to and fro by virtue of a crankpin (27) joined to the input shaft of the drive (5) engaging in a slotted area (29) of the rack body (30, 30'), a gear wheel (44) attached to the driven shaft journal (7) being in engagement with a group of teeth (42) of a rack (38, 39) of the rack body (30, 30').

2. Soil loosening device having a support (2) for a plurality of downwardly projecting, tine-like soil loosening tools (3, 4) and for a motorised drive (5) which is in a driving relationship with the soil loosening tools (3, 4) via a gearing arrangement accommodated in the support (2), and having a handle (69) for moving the device over the surface of the ground that is to be loosened, the gearing arrangement incorporating a mechanism (17, 30, 44) for converting the continuous rotation of the drive (5) into an oscillating angular motion of shaft journals (7) which carry the soil loosening tools (3, 4) in a fork-like arrangement, at least two of said shaft journals being driven in opposite directions, characterised in that the mechanism for converting the rotation into an oscillating angular motion incorporates a rack body (30, 30') which is displaceably located in the support (2) and which can be moved to and fro by virtue of a crankpin (27) joined to the input shaft of the drive (5) engaging in a slotted area (29) of the rack body (30, 30'), with gear wheels (44) attached to the shaft journals (7) driven in opposite directions each engaging with a group of teeth (42) of a rack (38, 39) of the rack body (30, 30'), the teeth (43) of which are directed in the opposite direction to those engaging with the gear wheel (44) attached to the other of said shaft journals (7).

3. Soil loosening device according to claim 2, characterised in that as racks the rack body (30, 30') has two driving limbs (38, 39) directed in opposite directions and offset relative to one another, the groups of teeth (42) being disposed on the inside edge (40, 41) of said driving limbs (32, 39).

4. Soil loosening device according to one of claims 1 to 3, characterised in that guide members (34, 35) for the rack body (30, 30') are provided on the longitudinal side walls (32, 33; 32', 33') of the housing of the support (2).

5. Soil loosening device according to one of claims 2 to 4, characterised in that four shaft journals (7) are provided in a row and driven in pairs in an opposed, oscillating motion.

6. Soil loosening device according to one of claims 1 to 5, characterised in that the tools attached to one shaft journal (7) are of different lengths.

7. Soil loosening device according to one of claims 1 to 6, characterised in that the motorised drive (5) with a handle (60) attached thereto can be removably connected to the support (2) in at least two different angular positions by a coupling (9).

## Revendications

1. Instrument d'ameublissement du sol, comprenant, d'une part, un corps de support (2) pour au moins un outil d'ameublissement du sol (3, 4) en forme de pointe de fourche et faisant saillie vers le bas et pour un entraînement par moteur (5) qui est en liaison d'entraînement avec cet outil d'ameublissement du sol (3, 4) par l'intermédiaire d'un mécanisme de transmission logé dans le corps de support (2) et, d'autre part, une poignée (60) permettant de déplacer l'instrument sur la surface du sol à ameublir, le mécanisme de transmission comprenant un mécanisme (17, 30, 44) permettant de convertir le mouvement rotatif continu de l'entraînement (5) en un mouvement angulaire oscillant d'un tronçon d'arbre (7) qui porte l'outil d'ameublissement du sol (3, 4) suivant un agencement en fourche, caractérisé en ce que le mécanisme de conversion du mouvement rotatif en un mouvement angulaire oscillant comprend un corps à crémaillère (30, 30') qui est guidé en translation dans le corps de support (2) et qui peut se déplacer dans les deux sens grâce à l'engagement d'un tourillon de manivelle (27), solidaire de l'arbre de sortie de l'entraînement (5), dans une lumière (29) de ce corps à crémaillère (30, 30'), tandis qu'une roue dentée (44) fixée sur le tronçon d'arbre (7) entraîné engrène avec un groupe de dents (42) d'une crémaillère (38, 39) du corps à crémaillère (30, 30').

2. Instrument d'ameublissement du sol, comprenant, d'une part, un corps de support (2) pour plusieurs outils d'ameublissement du sol (3, 4) en forme de pointe de fourche et faisant saillie vers le bas et pour un entraînement par moteur (5) qui est en liaison d'entraînement avec ces outils d'ameublissement du sol (3, 4) par l'intermédiaire d'un mécanisme de transmission logé dans le corps de support (2) et, d'autre part, une poignée (60) permettant de déplacer l'instrument sur la surface du sol à ameublir, le mécanisme de transmission comprenant un mécanisme (17, 30, 44) permettant de convertir le mouvement rotatif continu de l'entraînement (5) en un mouvement angulaire oscillant de tronçons d'arbre (7) qui portent les outils d'ameublissement du sol (3, 4) suivant un agencement en fourche et dont au moins deux sont entraînés dans des sens opposés entre eux, caractérisé en ce que le mécanisme de conversion du mouvement rotatif en un mouvement angulaire oscillant comprend un corps à crémaillères (30, 30') qui est guidé en translation dans le corps de support (2) et qui peut se déplacer dans les deux sens grâce à l'engagement d'un tourillon de manivelle (27), solidaire de l'arbre de sortie de l'entraînement (5), dans une lumière (29) de ce corps à crémaillères (30, 30'), tandis que des roues dentées (44) fixées sur les tronçons d'arbre (7) entraînés dans des sens opposés entre eux engrènent chacune avec un groupe de dents (42) d'une crémaillère (38, 39) du corps à crémaillères (30, 30'), les dents (43) du groupe de dents (42) correspondant à l'un des tronçons d'arbre (7) étant dirigées dans le sens opposé à celui des dents qui engrènent avec la roue dentée (44) fixée sur l'autre de ces tronçons d'arbre (7).

3. Instrument d'ameublissement du sol suivant la revendication 2, caractérisé en ce que le corps à crémaillères (30, 30') comporte deux ailes d'entraînement (38, 39), dirigées dans des sens opposés l'un à l'autre et décalées l'une par rapport à l'autre, qui servent de crémaillères, les groupes de dents (42) étant disposés sur le bord intérieur (40, 41) de ces ailes d'entraînement (38, 39).

4. Instrument d'ameublissement du sol suivant l'une des revendications 1 à 3, caractérisé en ce qu'il est prévu, sur les parois latérales longitudinales (32, 33; 32', 33') du boîtier du corps de support (2), des guides (34, 35) pour le corps à crémaillères (30, 30').

5. Instrument d'ameublissement du sol suivant l'une des revendications 2 à 4, caractérisé en ce qu'il est prévu quatre tronçons d'arbre (7) qui sont disposés suivant une rangée et qui sont entraînés par paires dans un mouvement oscillant opposé.

6. Instrument d'ameublissement du sol suivant l'une des revendications 1 à 5, caractérisé en ce que les outils fixés sur un tronçon d'arbre (7) sont de longueurs différentes.

7. Instrument d'ameublissement du sol suivant l'une des revendications 1 à 6, caractérisé en ce que l'entraînement par moteur (5), avec une poignée (60) fixée sur lui, peut être rendu solidaire du corps de support (2) dans au moins deux positions angulaires différentes et d'une manière amovible, grâce à un accouplement (9).

*Fig.1*

*Fig.2*

Fig.3

9  20  12

24  19
23  11

2  10  44  17 45  2  44

26

7  46  30  28  27  7

32

28

7  44

29  27

44  7

30  33  Fig. 4

30'  36  38

43  39  41

42  40

37  29'  Fig.5

Fig.6  Fig.7  Fig.8  Fig.9  Fig.10  Fig.11  Fig.12